# EUROPÄISCHE PATENTANMELDUNG

(11) **EP 1 103 940 A1**
(43) Veröffentlichungstag der Anmeldung: **30.05.2001**
(21) Anmeldenummer: 00125788.0
(22) Anmeldetag: 24.11.2000
(51) Int. Cl.: G09B 19/00, G01C 5/00, G01B 11/24

(54) **Vorrichtung zum Sichtbarmachen der Erdoberflächenkrümmung**

(30) Priorität: 26.11.1999 DE 29920817 U
(71) Anmelder: Kirchner, Wolfgang, 10707 Berlin (DE)
(72) Erfinder:
(74) Vertreter: Glawe, Delfs, Moll & Partner

(57) **Zusammenfassung**

Die Vorrichtung zum Sichbarmachen der Erdoberflächenkrümmung, zeichnet sich dadurch aus, daß sie eine oder mehrere Reihen mit je drei oder mehr in solcher Höhe angeordneten Lichtquellen (3) aufweist, das von den Enden der Reihe aus alle Lichtquellen (3) der Lichterreihe zu sehen sind, daß jede Reihe von Lichtquellen (3) länger als 10 km ist und daß alle Lichtquellen (3) einer Lichterreihe in einem gleichmäßigen Abstand zu einer geraden Linie und in einer gleichmäßigen auf den Meeresspiegel bezogenen Höhe angeordnet sind.

## Beschreibung

Die Erfindung betrifft eine Vorrichtung zum Sichtbarmachen der Erdoberflächenkrümmung.

Bekannt ist, daß Menschen an der Küste eines Meeres oder eines großen Binnensees eine Vorstellung von der Kugelgestalt der Erde erhalten können, wenn sie bei günstiger Witterung und guter Fernsicht über dem Wasserhorizont nur die oberen Teile eines weit entfernten Schiffes oder Bauwerkes sehen können. Diese einzige Möglichkeit für die unmittelbare persönliche Erfahrung der Oberflächenkrümmung der Erde ist jedoch sehr mangelhaft, da man gewissermaßen nur die Vorderseite des vor einem liegenden Wasserberges sieht, dessen Begrenzungslinien dazu meist im Nebel oder Dunst verschwimmen, so daß die Wölbung der Wasserfläche wegen Fehlens jeglicher Vergleichsmaßstäbe meistens nicht erkannt wird. Dabei ist die Höhe des Wasserberges mit z. B. 7,80 m zwischen zwei 20 km auseinanderliegenden Orten bzw. mit 17,70 m Höhe bei 30 km Entfernung nicht unbeträchtlich und eine solche Zahlenangabe löst dementsprechend auch regelmäßig Erstaunen aus, da in der Natur oder auf Fotos so gut wie nichts davon zu erkennen ist.

Weiterhin ist bekannt, daß die Menschen sich heute in stark zunehmendem Maße für solche Erscheinungsformen der Natur sowie für naturwissenschaftliche und technische Zusammenhänge interessieren und viel Zeit, Mühe und Kosten aufwenden, um diese persönlich erleben und erfahren zu können. Dementsprechend sind neben gewerblichen Unternehmen auch Städte und Gemeinden in der ganzen Welt zunehmend bemüht, diesem allgemeinen Interesse zu der Natur und der Technik Rechnung zu tragen und entsprechende Erlebnismöglichkeiten für die Allgemeinheit und besonders für den Tourismus zu schaffen.

Die Aufgabe der Erfindung besteht darin, die unmittelbare persönliche Wahrnehmung der Erdoberflächenkrümmung von der Erde aus für jeden Menschen zu ermöglichen.

Insbesondere soll auch Gemeinden und anderen öffentlichen Institutionen und gewerblichen Unternehmen die Möglichkeit verschafft werden, die erfindungsgemäße Vorrichtung zum Nutzen für die Allgemeinheit zu errichten und der Öffentlichkeit zur Verfügung zu stellen, was selbstverständlich auch für Bauer und Betreiber wirtschaftlich Nutzen bedeutet. Bei einer vorteilhaften Ausführungsform soll die Wahrnehmung der Erdoberflächenkrümmung ohne spezielles optisches Gerät möglich sein.

Die erfindungsgemäße Lösung besteht darin, daß die Vorrichtung eine oder mehrere Reihen mit je drei oder mehr in solcher Höhe angeordneten Lichtquellen aufweist, daß von den Enden der Lichterreihe aus alle Lichtquellen der Lichterreihe zu sehen sind, daß jede Reihe von Lichtquellen länger als 10 km ist und daß alle Lichtquellen einer Lichterreihe in einem gleichmäßigen Abstand in einer geraden Linie und in einer gleichmäßigen auf den Meeresspiegel bezogenen Höhe angeordnet sind.

Die Reihe von Lichtquellen ist also länger als 10 km, insbesondere etwa zwischen 15 bis 25 km lang. Die Lichtquellen sind auf einer geraden Linie angeordnet, die etwa dem Großkreis entsprechen kann. Da die Erdoberflächenkrümmung auf 15 km Entfernung einen Bogen von 4,40 m Höhe bildet bzw. auf 25 km einen Bogen von 12,30 m Höhe und alle Lichtquellen der Lichterreihe von den Enden der Lichterquelle aus sichtbar sind, wird die Lichterreihe in der Ansicht von ihren Endpunkten als ein Lichterbogen und damit als genaues Abbild der Erdoberflächenkrümmung wahrgenommen.

Diese Wahrnehmbarkeit ist wie folgt nachzuweisen. Es ist wissenschaftlich gesichert, daß das menschliche Auge in der Lage ist, 2 Punkte, deren Verbindungslinien zum Auge einen Winkel von 1=1 Winkel-Minute = 1/60° einschließt, noch getrennt erkennen zu können (siehe Veröffentlichung "Voraussetzung für das Erkennen farbiger Lichtzeichen" von Dr.-Ing. Hans-Rüdiger Gerdes, Wasser- und Schiffahrtsverwaltung des Bundes, Seezeichenversuchsfeld Koblenz, Sonderdruck aus der Zeitschrift "Ortung und Navigation" 3/1982, Seite 300 oben).

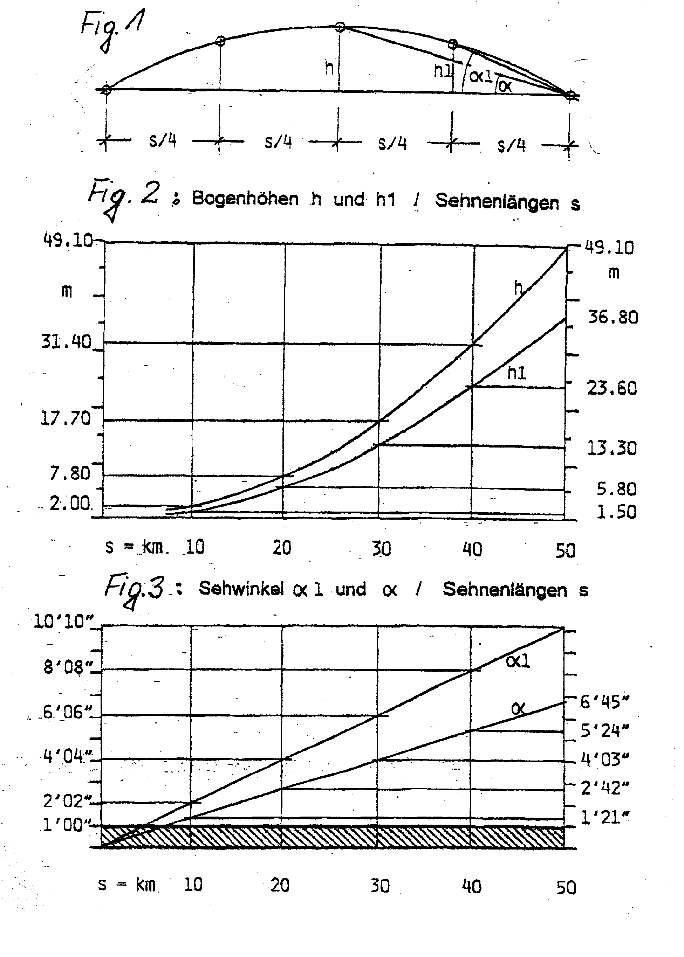

In Figur 1 und 2 sind die aus der Erdradiuslänge von 6371 km errrechneten Bogenhöhen h und hl für die verschiedenen Bogenlängen (Sehnenlängen) angegeben und es ist daraus ersichtlich, daß die Bogenhöhen mit zunehmender Sehnenlänge überproportional anwachsen.

Die Figur 3 zeigt mit den aus Figur 2 bestimmten Sehwinkeln, daß die Wahrnehmbarkeit der Bogenhöhen mit zunehmender Verlängerung der Lichterreihe trotz der größeren Entfernungen verbessert wird und daß alle für die Wahrnehmbarkeit der Bogenhöhen wichtigen Sehwinkel deutlich über dem oben genannten Schwellenwert von 1 Winkelminute und damit deutlich im wahrnehmbaren Bereich liegen.

Aus den Figuren 1 bis 3 ist außerdem ersichtlich, daß die Bogenhöhen bei Betrachtung von einem Ende des Lichterbogens aus in der vorderen Hälfte größer gesehen werden als die anderen Bogenhöhen und daß die größte Bogenhöhe in einer Entfernung bis etwa 1/4 der Bogenlänge vom Betrachter aus wahrzunehmen ist. Von der Wahrnehmbarkeit dieser Größen kann sich jeder in der Natur selbst überzeugen. So entspricht die Bogenhöhe in der Mitte eines 20 km langen Lichterbogens einem Bauwerk von 7,80 m Höhe aus 10 km Entfernung betrachtet und die Bogenhöhe hl auf 1/4 der Bogenlänge einem Bauwerk von 5,80 m Höhe aus 5 km Entfernung betrachtet.

Hinsichtlich der Wahrnehmbarkeit für das menschliche Auge ist außerdem noch die meteorologische Sichtweite zu berücksichtigen, wie sie z. B. für die Nordsee und die westliche Ostsee ebenfalls in der oben genannten Veröffentlichung von Herrn Dr.-Ing. H.-R. Gerdes WSV auf Seite 332 Bild 28 dokumentiert ist. Diese Tabelle weist für die genannte Gegend und für die Entfernung von 15 km eine Häufigkeit der definierten meteorologischen Sichtweite von ca. 57 % und für 25 km eine Häufigkeit von ca. 38 % aus, so daß hier von einer ausreichenden meteorologischen Sichtweite für die beschriebenen Vorrichtungen ausgegangen werden kann.

Damit ist die Wahrnehmbarkeit der Erdoberflächenkrümmung mit Hilfe der beschriebenen Vorrichtung nachgewiesen. Von besonderer Wichtigkeit ist dabei auch die von den Menschen als zuverlässig waagerecht und eben angesehene Wasserfläche als vergleichsmaßstäbliche Bezugsfläche für die hier beschriebene Vorrichtung.

Die Lichterreihe auf dem Wasser kann durch punktförmige Lichtquellen auf schwimmenden Leuchtbojen hergestellt werden, die in annähernd gleichmäßigen Abständen im Gewässer zu verankern sind. Die Abstände können mit mehreren 100 m bis über 1000 m relativ groß gewählt werden, da das menschliche Auge mehrere derartige Lichtpunkte insbesondere bei einer Ansicht in Längsrichtung zu einer Linie bzw. zu einem Bogen ergänzt. Alternativ können die Lichtquellen für die Lichterreihe auch auf Booten oder Schiffen installiert werden, was besonders bei zeitlich begrenzten Veranstaltungen dieser Art von Interesse ist. Gegebenenfalls können auch noch Maßnahmen getroffen werden, daß die Lichtquellen so auf und ab bewegt werden, daß die Wellenbewegung der Boje oder des Schiffs ausgeglichen wird.

Wenn hier von "Lichtquellen" die Rede ist, so sind damit allgemein Quellen elektromagnetischer Strahlung zu verstehen, also nicht nur Quellen von sichtbarem Licht, sondern auch von Infrarotlicht oder von Radarwellen. Die Quellen müssen auch nicht aktive Quellen wie z. B. eine Lampe sein, sondern können auch passive Quellen sein wie z. B. Spiegel oder andere Reflektoren, was dann die Lichtquellen von Energieversorgung unabhängig macht. Insbesondere können für die Lichterreihe Lichtquellen und die dafür erforderlichen Energieversorgungen der verschiedensten Art eingesetzt werden, wie dieses bei der Beleuchtung von Verkehrswegen und insbesondere bei Seezeichen, Leuchtbojen und Leuchttürmen praktiziert wird. Zu besonderen Zwecken können bei diesen Vorrichtungen auch Infrarot- und Laserlicht sowie Radar eingesetzt werden. Weiterhin kann die Lichterreihe für Dauer-, Intervall-, Blitz- und Blinkbetrieb eingerichtet werden.

Eine besondere Form von Lichtquellen für die Lichterreihe werden von Reflektoren aus Spiegel- und Linsensystemen gebildete, die Kunst- und Sonnenlicht sowie Radar über große Entfernungen zuverlässig reflektieren. Derartige Reflektorsysteme können auch auf der Außenhaut von gasgefüllten Ballons installiert werden, die mit den beschriebenen Lichtquellen ausgerüstet werden und die in Gewässern oder im Gelände verankert werden.

Natürlich kann man eine derartige Vorrichtung zur Sichtbarmachung der Erdoberflächenkrümmung auch mit Hilfe von Lichtmasten oder Ballons auf einem gewässerlosen Festlandsbereich errichten, wobei allerdings eine dem Auge als Vergleichsmaßstab dienende ebene Wasserfläche fehlt und die höchste Geländeerhebung im Zuge dieser Lichterreihe maßgebend für die gleichmäßige auf die Meereshöhe bezogene Konstruktionshöhe der Lichtquellen sowie der entsprechenden Beobachtungspunkte ist.

Eine Variante der beschriebenen Vorrichtung für den Bau in einer gewässerlosen Gegend ist die folgende. Die für die Vorrichtung zur Sichtbarmachung der Erdoberflächenkrümmung empfehlenswerte Bezugsfläche eines Gewässers wird in diesem Fall durch einen künstlichen Kanal hergestellt, bei dem schon ein verhältnismäßig kleiner Querschnitt und ein geringer Wasserstand ausreicht, um den Vergleichsmaßstab darzustellen. Bei dieser Bauart ist jedoch darauf zu achten, daß notwendige Querwege in jedem Fall in Form von Unterführungen unter dem künstlichen Kanal hindurchgeführt werden, um den optischen Bezug zwischen Wasserfläche und Lichterbogen in keinem Fall zu unterbrechen, oder aber, die Lichtquellen hoch genug über Brücken angeordnet sind, die über den Kanal führen.

Die beschriebenen Vorrichtungen zur Sichtbarmachung der Erdoberflächenkrümmung können auch mit anderen Bauwerken wie z. B. mit Brücken, Uferstrassen, Verkehrsbeleuchtungen und Verkehrszeichen kombiniert werden. Weiterhin können mit der Errichtung von zwei oder mehreren Lichterreihen verstärkt räumliche Eindrücke erzielt werden. Grundsätzlich gilt jedoch, daß die Lichterbögen desto deutlicher zu erkennen sind, je länger und je höher sie sind.

Besonders eindrucksvolle Ausführungen der beschriebenen Vorrichtungen sind mit Hilfe von Laserstrahlenquellen herzustellen, die an Stelle von punktförmigen Lichtquellen angeordnet werden. Mit diesen von den gebündelten Laserstrahlen in der Atmosphäre erzeugten Lichtfingern oder Lichtbalken kann fast der gesamte Lichterbogen in Idealform in den Himmel gezeichnet werden.

Die Lichterbögen der beschriebenen Vorrichtungen können außer in Längsrichtung von den Enden der Lichterreihen aus auch in Querrichtung insbesondere dann als Bögen erkannt werden, wenn sie durch Laserstrahlen in einheitlicher Höhe über dem Meeresspiegel dargestellt werden und zusätzlich ein gerader Tangential-Laserstrahl zwischen den Enden der Lichterreihe und über der Wasser- bzw. der Erdoberfläche als Vergleichsmaßstab für das menschliche Auge sichtbar gemacht wird. Bei der Beobachtung der Lichterbögen in Querrichtung ist jedoch zu berücksichtigen, daß wegen des natürlichen Gesichtsfeldes des Menschen von 45° bis 60° Ein relativ großer Abstand von z. B. 24,14 km bzw. 17,32 km von einem 20 km langen Lichterbogen einzunehmen ist, um den Bogen mit einem Blick in ganzer Länge erkennen zu können. Außerdem ist bei derartigen Beobachtungsabständen die Erdoberflächenkrümmung vom Beobachtungspunkt bis zum Lichterbogen zusätzlich bei der Bemessung der Konstruktionshöhe der Lichterreihe und der Beobachtungspunkte über dem Wasserspiegel bzw. über der höchsten Geländeerhebung zu berücksichtigen.

Ein Ausführungsbeispiel für eine Vorrichtung zur Sichtbarmachung der Erdoberflächenkrümmung auf einem größeren Binnensee besteht aus einer Lichterreihe von 20 km Länge, bei der alle Lichtquellen an den Masten von schwimmenden und im See verankerten Leuchtbojen in einer annähernd geraden dem Großkreis entsprechenden Linie und in einem annähernd gleichen Abstand von etwa 1000 m untereinander sowie in einer derartigen gleichmäßigen Höhe über dem Wasserspiegel in Position gebracht werden, daß von den Endpunkten der Lichterreihe aus alle 21 Lichtquellen zu sehen sind. Diese gleichmäßige Höhe der Lichtquellen über dem Wasserspiegel ist zweckmäßigerweise das größte Höhenmaß des Lichterbogens von 7,80 m plus einem Zuschlag für Wellenhöhe und Bodennebel von 2,00 m = 9,80 m.

Die Art der Lichtquellen sind herkömmliche Glühlampen mit Funkfernsteuerung sowie mit einer Solaranlage mit Batterie für einen umweltschonenden Betrieb. Außerdem sind die Bojen mit Sonnenreflektoren für die Sichtbarkeit am Tage ausgerüstet.

An den Enden der Lichterreihe sind zweckmäßigerweise an Land etwa 8,20 m hoch über dem Wasserspiegel des Sees, d. h. obige 9,80 m abzüglich ca. 1,60 m Augeshöhe, genügend begehbare Freiflächen zu schaffen, damit Besucher diese aus 21 Lichtquellen auf dem See bestehende Vorrichtung betrachten können.

Die Erfindung wird im folgenden anhand von vorteilhaften Ausführungsformen unter Bezugnahme auf die beigefügten Zeichnungen beschrieben. Es zeigen:
- Fig. 1: eine graphische Darstellung zur Erläuterung der in den graphischen Darstellungen der Figuren 2 und 3 verwendeten Größen;
- Fig. 2-3: 3 graphische Darstellungen der Bogenhöhen und Schwinkel in Abhängigkeit von der Länge der Lichterreihe;
- Fig. 4: in schematischer und übertriebener Darstellung die Sichtverhältnisse unter Berücksichtigung der Erdkrümmung;
- Fig. 5: in ähnlicher Darstellung wie in Fig. 4 eine erfindungsgemäße Vorrichtung;
- Fig. 6: in ähnlicher Darstellung wie in den Figuren 4 und 5 eine andere erfindungsgemäße Vorrichtung;
- Fig. 7: im Querschnitt eine Lichtquelle einer noch anderen Ausführungsform der Erfindung, die an einem Kanal angeordnet ist;
- Fig. 8: eine Lichtquelle, die an einem Ballon angeordnet ist, der an einer Boje befestigt ist;
- Fig. 9: eine Abwandlung der in Figur 5 dargestellen Ausführungsform;
- Fig. 10: eine Lichtquelle in Form eines Reflektors; und
- Fig. 11: eine noch andere Ausführungsform eine Lichtquelle.

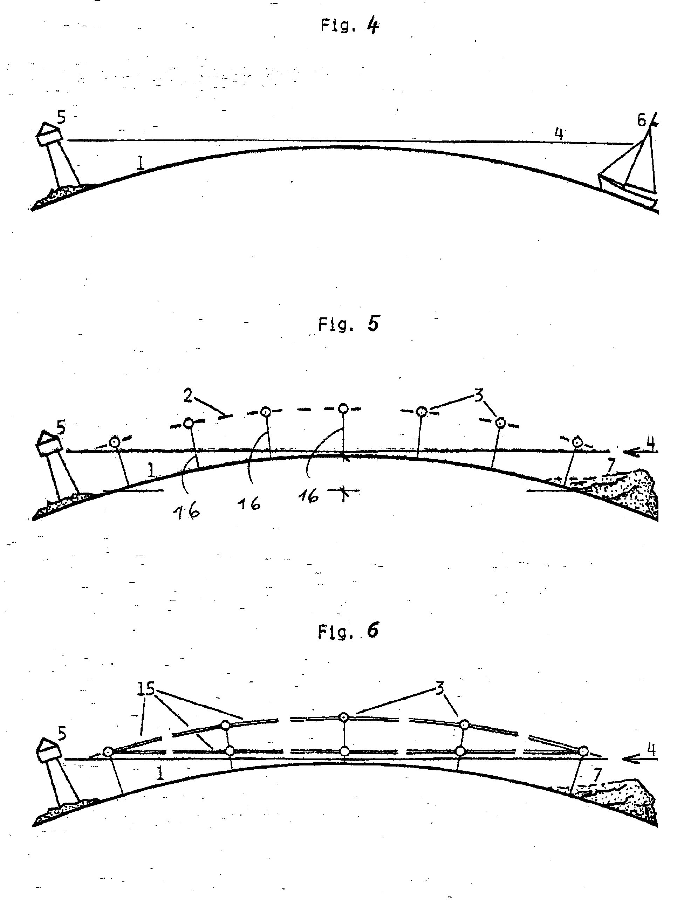

In Figur 4 ist gezeigt, daß infolge der Erdkrümmung 1 ein bei 5 angeordneter Beobachter einen Horizont 4 sieht, aufgrund dessen er das Segelschiff 6 nicht mehr ganz sehen kann, sondern nur noch dessen oberen Teil. Da sich das Objekt 6 in großer Entfernung vom bei 5 befindlichen Beobachter befindet, kann er da Objekt 6 nur noch verschwommen erkennen und wird gar nicht bemerken, daß er nur einen Teil des Objekts 6 wegen der Erdkrümmung sehen kann. Das gleiche würde natürlich gelten, wenn sich der Beobachter an erhöhter Stellung im Segelschiff 6 befindet; er würde dann vom Turm 5 nur den oberen Teil wahrnehmen können.

In Figur 5 ist eine Ausführungsform der Erfindung gezeigt, wo eine größere Anzahl von Lichtquellen 3 auf einer geraden Linie mit Hilfe von Masten 16 in überall gleicher Höhe über den Meeresspiegel angeordnet ist. Ein Beobachter bei 5 oder ein Beobachter auf einem Berg 7 kann daher die gekrümmte Verbindungslinie der Lichtquellen 2 und damit die Erdkrümmung direkt erkennen.

Bei der Ausführungsform der Figur 6 sind die Lichtquellen 3 Laser, die Laserstrahlen 15 emittieren. Dadurch erhält man durch die in gleicher Höhe angeordneten Lichtquellen 3 ein bogenförmiges Lichtband, das von der Seite aus genügender Entfernung sichtbar ist. Zusätzlich sind unterhalb der oberen Lichtquellen 3 weitere Lichtquellen 3 auf der geraden Horizontlinie 4 angeordnet, so daß deutlich eine gerade Bezugslinie von der Seite zu sehen ist, durch die die Bogenform der Laserstrahlen der oberen Lichterreihe verdeutlicht wird.

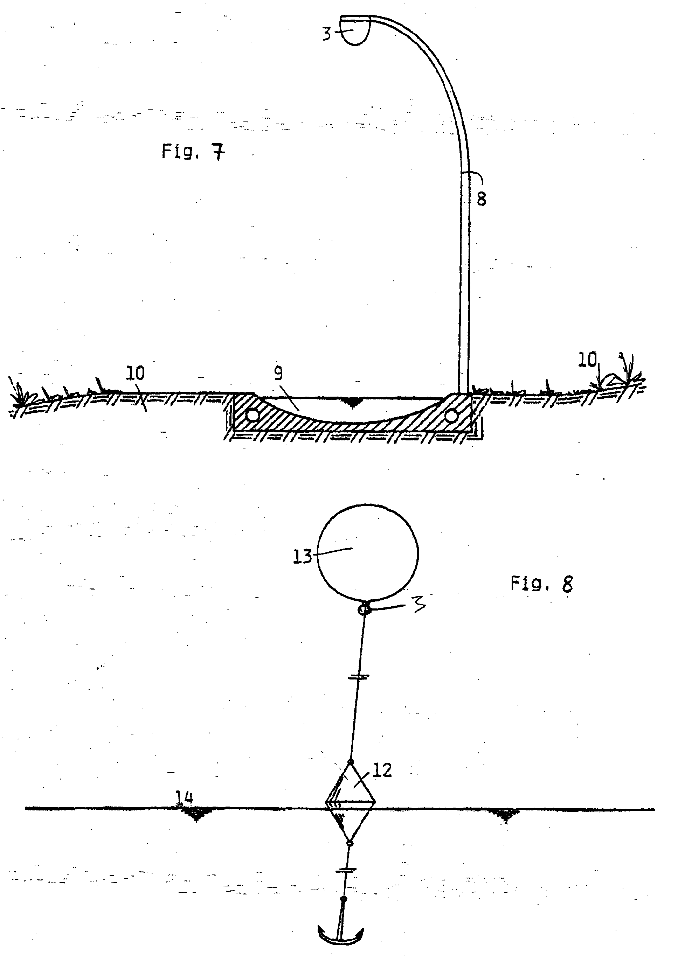

In Figur 7 ist eine Variante gezeigt, die auf dem Land errichtet werden kann. Die Bezugsebene im Gelände 10 wird dabei durch einen Kanal 9 gebildet, der geringe Tiefe und Breite haben kann, aber die Basislinie für die Vorrichtung liefert. Die Lichtquellen 3 sind dann an Masten 8 überall in gleicher Höhe über der Wasseroberfläche des Kanals 9 angeordnet.

Bei der Ausführungsform der Figur 8 ist die Lichtquelle 3 an einem Ballon befestigt, die wiederum auf einem See 14 verankert ist. Die Boje 12 kann dabei mit Energieversorgungssystemen für die Lichtquelle 3 versehen sein. Auf solche Energieversorgungssysteme kann natürlich verzichtet werden, wenn die "Lichtquellen" 3 Reflektoren sind. Dies gilt ebenfalls für die anderen Ausführungsformen.

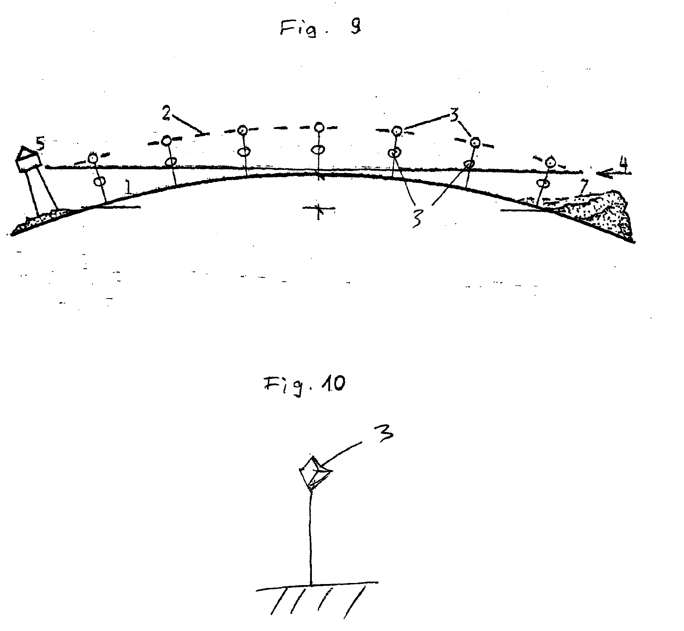

Bei der Ausführungsform der Figur 9 sind zwei übereinander angeordnete Reihen von Lichtquellen 3 angeordnet, in denen die Lichtquellen jeweils die gleiche Höhe über dem Meeresspiegel haben. Ein etwa bei 5 oder bei 7 angeordneter Beobachter sieht so zwei Bögen von Lichtern 3.

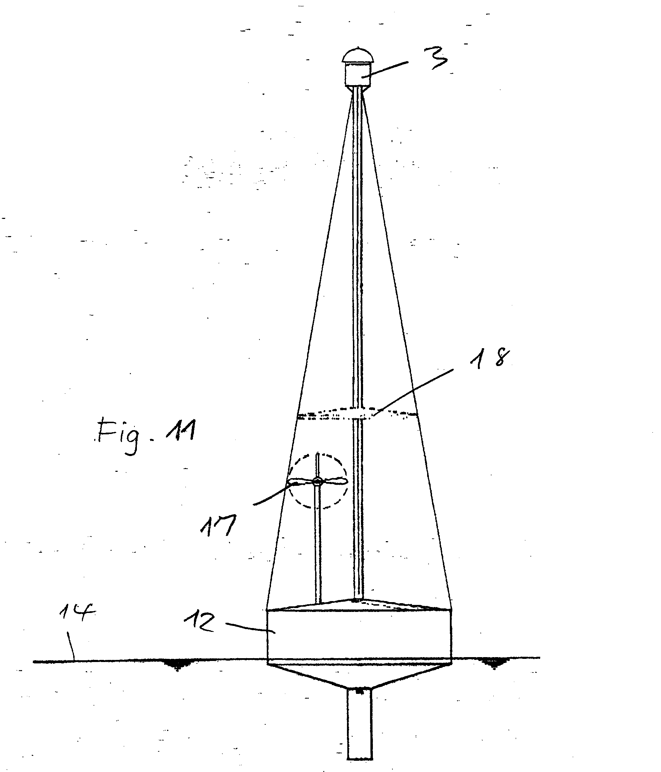

In Figur 10 ist eine Lichtquelle in Form eines Reflektors 3, hier eines Retroreflektors gezeigt. Wird die Reihe von solchen Reflektoren von einem Ende mit Licht oder im Falle von Radarbeobachtung mit Radarstrahlen beleuchtet, so erhält man ebenfalls die gekrümmte Linie von Lichtpunkten bzw. Bildpunkten auf dem Radarschirm, die die Erdkrümmung wiedergibt.

Bei der Ausführungsform der Figur 11 ist die Lichtquelle 3 direkt in einer Boje 12 in einem Gewässer 14 angeordnet. Die Energieversorgung erfolgt dabei durch ein Windrad 17 oder durch Solarzellen, die bei 18 angedeutet sind.

## Patentansprüche

1. Vorrichtung zum Sichtbarmachen der Erdoberflächenkrümmung, dadurch gekennzeichnet, daß sie eine oder mehrere Reihen mit je drei oder mehr in solcher Höhe angeordneten Lichtquellen (3) aufweist, daß von den Enden der Reihe aus alle Lichtquellen (3) der Lichterreihe zu sehen sind, daß jede Reihe von Lichtquellen (3) länger als 10 km ist und daß alle Lichtquellen (3) einer Lichterreihe in einem gleichmäßigen Abstand in einer geraden Linie und in einer gleichmäßigen auf den Meeresspiegel bezogenen Höhe angeordnet sind.

2. Vorrichtung nach Anspruch 1, dadurch gekennzeichnet, daß die Lichtquellen (3) der Lichterreihen in Gewässern auf schwimmenden Untersätzen (12) angeordnet sind.

3. Vorrichtung nach Anspruch 1, dadurch gekennzeichnet, daß die Lichtquellen (3) der Lichterreihen an Masten (8, 16) im Gelände (10) oder im Wasser (9, 14) angeordnet sind.

4. Vorrichtung nach Anspruch 1, dadurch gekennzeichnet, daß die Lichtquellen (3) der Lichterreihen an licht- und radarreflektierenden und im Wasser (9, 14) oder auf dem Festland (10) verankerten Ballons (13) befestigt sind.

5. Vorrichtung nach einem der Ansprüche 1-4, dadurch gekennzeichnet, daß die Lichtquellen (3) der Lichterreihen mit Erd-, Kunst- und Wasserbauten (9) kombiniert werden.

6. Vorrichtung nach einem der Ansprüche 1-5, dadurch gekennzeichnet, daß die Lichtquellen (3) der Lichterreihen weißes oder farbiges Licht ausstrahlen.

7. Vorrichtung nach einem der Ansprüche 1-6, dadurch gekennzeichnet, daß die Lichtquellen (3) der Lichterreihen Infrarotlicht ausstrahlen.

8. Vorrichtung nach einem der Ansprüche 1-7, dadurch gekennzeichnet, daß die Lichtquellen (3) der Lichterreihen Laserlicht ausstrahlen.

9. Vorrichtung nach einem der Ansprüche 1-8, dadurch gekennzeichnet, daß die Lichtquellen (3) der Lichterreihen mit Radarstrahlen ausgerüstet sind.

10. Vorrichtung nach einem der Ansprüche 1-9, dadurch gekennzeichnet, daß die Lichtquellen (3) der Lichterreihen mit Reflektoren für Kunstlicht, Sonnenlicht und Radar ausgerüstet sind.

11. Vorrichtung nach einem der Ansprüche 1-10, dadurch gekennzeichnet, daß in jeder Lichterreihe zwei oder mehrere Reihen von Lichtquellen gleicher oder verschiedener Art in verschiedenen Höhen angeordnet sind.
